# EUROPEAN PATENT APPLICATION

(11) **EP 4 654 438 A1**
(43) Date of publication of application: **26.11.2025**
(21) Application number: 24177910.7
(22) Date of filing: 24.05.2024
(51) Int. Cl.: H02K 1/18, H02K 5/04, H02K 5/24, H02K 15/02, H02K 5/15

(54) **STATOR MOUNTING ARRANGEMENT**

(71) Applicant: ABB SCHWEIZ AG, 5400 Baden (CH)
(72) Inventor: Hytönen, Mikko, 00380 Helsinki (FI)
(74) Representative: Kolster Oy Ab

(57) **Abstract**

The present invention relates to an electrical machine (2) comprising: a stator core (6) extending along an axial direction (20) and supported by a stator frame (4). An intermediate plate (12) is provided between the stator core (6) and the stator frame (4) and configured to support the stator core (6). One of the stator frame (4) and the intermediate plate (12) comprises a stopping formation (36) configured to abut the other of the stator frame (4) and the intermediate plate (12) to constrain movement of the stator core (6) relative to the stator frame (4) in at least one direction in the axial direction (20). The stopping formation (36) is movable relative to the one of the stator frame (4) and the intermediate plate (12).

## Description

The present disclosure relates to a mounting arrangement for a stator of an electric machine and a method of mounting of the stator.

### Background of the Invention

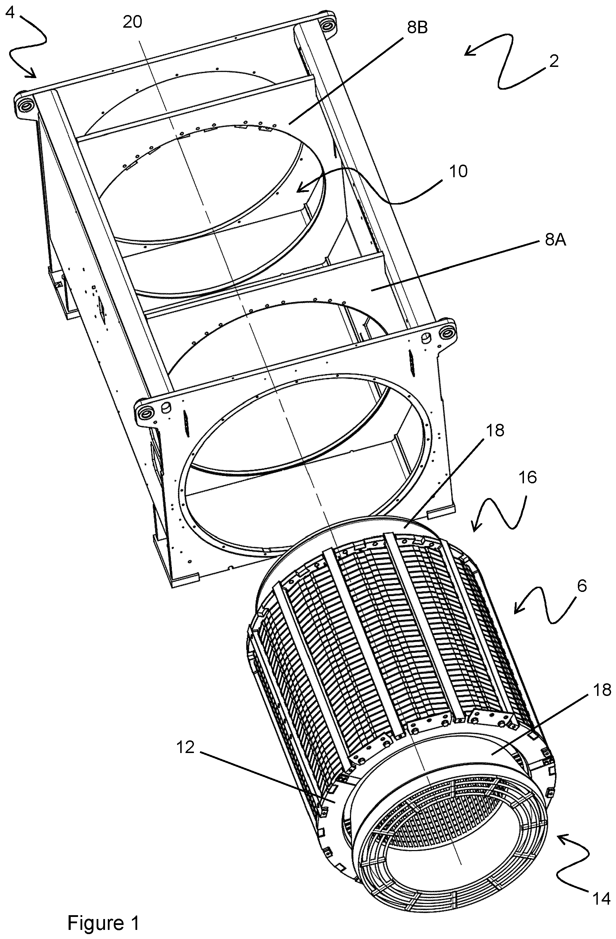

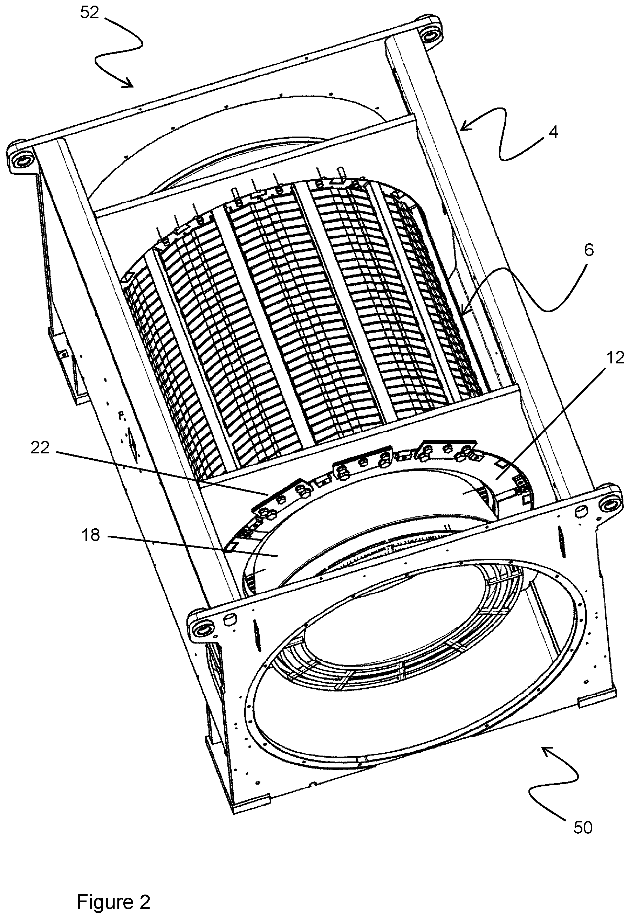

In prior art motor arrangements, a stator core (see figures 1 and 2 for reference) is mounted to a stator frame. The stator core may be fitted by so called "shrink fitting" in which the core is heated, inserted into the frame, and left to cool such that the core contracts and is compressed against the frame. The inventor has found numerous problems with the prior art arrangement.

The cooling process of the core may be unpredictable, for example, due to differential cooling or variable geometry of the stator core. As the stator core cools, the axial position thereof within the frame may vary. Other aspects of the manufacturing process may also cause axial variation of the position, for example, manufacture tolerances in the stator core, the frame, the rotor core, the rotor position, and/or framework machining or welding. This may lead to excessive and/or asymmetric stresses, as the stator core attempts to align itself with the frame and/or with the rotor mounted within the stator core. This may lead to excessive wear, vibration or other undesirable operation.

The present invention aims to overcome or ameliorate one or more of the above problems, in particular, to help ensure correct axial positioning.

### Statement of Invention

According to first aspect of the invention, there is provided: an electrical machine comprising: a stator core extending along an axial direction and supported by a stator frame; an intermediate plate provided between the stator core and the stator frame and configured to support the stator core; where one of the stator frame and the intermediate plate comprises a stopping formation configured to abut the other of the stator frame and the intermediate plate to constrain movement of the stator core relative to the stator frame in at least one direction in the axial direction.

The stopping member may be movable relative to the one of the stator frame and the intermediate plate.

The stopping formation may be detachably fixed to the one of the stator frame and the intermediate plate (i.e. completely removable therefrom). The stopping formation may be detached via a releasable or detachable fastener.

A plurality of stopping formations may be provided. The stopping formations may be circumferentially spaced. The stopping formation may comprise a plate.

The other of the stator frame and the intermediate plate may comprise a recess. The recess may be configured to receive the stopping formation. The recess may extend circumferentially about the stator frame or intermediate plate. The recess may be continuous (i.e. multiple stopping plates may be received in a single recess). The recess may be discontinuous.

The stopping formation may be loosely held on the other of the stator frame and the intermediate plate (e.g. not connected via a fastener or other attachment formation). The stopping formation may be held such that the stator core in constrained in only one direction in the axial direction. The stopping formation may be loosely held on/in the groove.

The stator frame or stator core may a comprise drive end and a non-drive end. The stopping formation may be proximal one of the drive end and the non-drive end, such that the other of the drive end and a non-drive end is not constrained in the axial direction. The stopping formation may be proximal the drive end and the non-drive end, such that both of the drive end and the non-drive end is constrained in the axial direction. The stopping formation may prevent axial movement in one direction at the non-drive end and prevent axial movement in a second opposing direction at the drive end.

One of the stator frame and the intermediate plate may comprises a groove. The groove may be configured to receive the stopping formation therein. The stopping formation may be mounted or affixed in the groove. The stopping formation and/or groove may be provided in an axially outward facing position. Axially outward movement may be permitted whilst axially inward movement Is prevented. The groove may comprise a fixing formation to affix the stopping formation. The fixing formation may comprise an aperture and/or screw threads. A fastener may extend between the stopping formation and the groove.

The stopping member may be coplanar with stator frame and/or the intermediate plate.

The groove and/or the stopping member may extend in a radial direction. The stopping formation may extend radially outwardly from the stator frame or intermediate plate. The stopping formation be provided on an outer edge of the intermediate plate. The stopping formation be provided on an inner edge of the stator frame.

The intermediate plate may be annular or ring shape. The stator frame may comprise an aperture to receive the intermediate plate therein.

The stator frame may comprise an outer plate. The outer plate may comprise a bearing shield fixing surface. The outer plate may comprise a recess to allow the stopping member to pass therethrough whilst affixed to the intermediate member. The recess may extend in a radial direction. A plurality of recesses may be provided. The recesses may be circumferentially spaced about the bearing shield.

The intermediate member may comprise a plurality of compression portions configured to engage the stator core in use. The compression portions may comprise a hollow profile and/or U-shaped profile.

The electrical machine may comprise one or more plate. The plate may be fixed to both the intermediate member and the stator frame to provide a rigid connection therebetween. A plurality of plates may be provided. The plates may be circumferentially spaced.

The electrical machine may comprise a generator and/or a motor.

According to a further aspect, there is provided: a method of assembling an electrical machine comprising: providing a stator core extending along an axial direction and supporting the stator core using a stator frame; supporting the stator core using an intermediate plate between the stator core and the stator frame, where one of the stator frame and the intermediate plate comprises an stopping formation; abutting the stopping formation against the other of the stator frame and the intermediate plate to constrain movement of the stator core relative to the stator frame in at least one direction in the axial direction.

The method may comprise shrink fitting the stator core onto the stator frame. The stopping formation may abut the other of the stator frame and the intermediate plate to constrain movement of the stator core before and/or during a cooling phase of the shrink fitting process.

Any aspect of the invention may be combined with any other aspect of the invention where practicable.

### Description

Embodiments of the present invention are described below, by way of example only, with reference to the accompanying drawings:
**Figure 1** shows an exploded perspective view of an electrical machine;
**Figure 2** shows a perspective view of the electrical machine;
**Figure 3** shows an end view of the electrical machine;
**Figure 4** shows a perspective view of an intermediate plate;
**Figure 5** shows a perspective view of a stopping member;
**Figure 6** shows a plan view of the stopping member engaging the stator frame;
**Figure 7** shows a sectional side view of the stopping member engaging the stator frame;
**Figure 8** shows a perspective view of a bearing shield fixing surface of the electrical machine;
**Figure 9** shows a plan view of a recess of the bearing shield fixing surface.

An electrical machine 2 is shown in figures 1 and 2. In the present embodiment, the machine 2 comprises a motor. In other embodiments, the machine 2 comprises a generator or the like 2. The motor 2 comprises a frame 4 configured to support a stator core 6. The frame 2 is rectangular in shape. The frame 2 comprises a plurality of frame plates 8 configured to receive the core 6. The frame plates are spaced along the axial length of the machine 2. The frame plate 8 comprise circular apertures 10 to receive and mount the core 6. In can be understood that the exact shape or form the frame 4 and core 6 are not pertinent to the present invention.

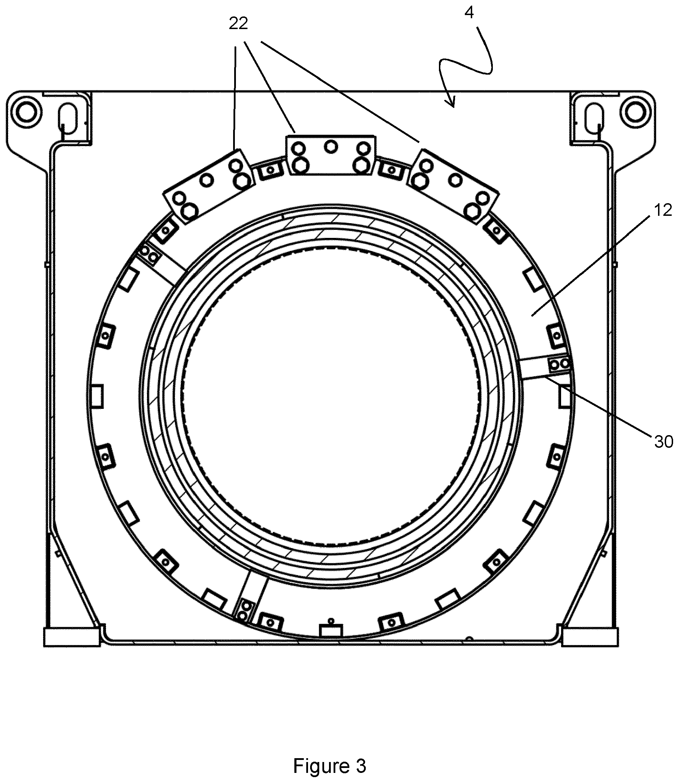

As best seen in figures 2 and 3, the core 6 is mounted to a pair of inner plates 8A, 8B. An intermediate plate 12, or pressing plate, is provided between one of the inner plates 8A and the stator core 6. A second intermediate plate (not shown) is provided between a second plate 8B and the stator core 6. The intermediate plate 12 is provided proximal an end 14 of the stator core 6. The second immediate plate 12 is provided proximal the second end 16 of the stator core 6. The stator core 6 comprises a stator windings 18. The stator 6 is mounted into the frame via a heat shrinking process. After the heating shrinking process, plates 22 are attached between the intermediate plates 12 and the inner plates 8A,8B to provide a secure connection therebetween.

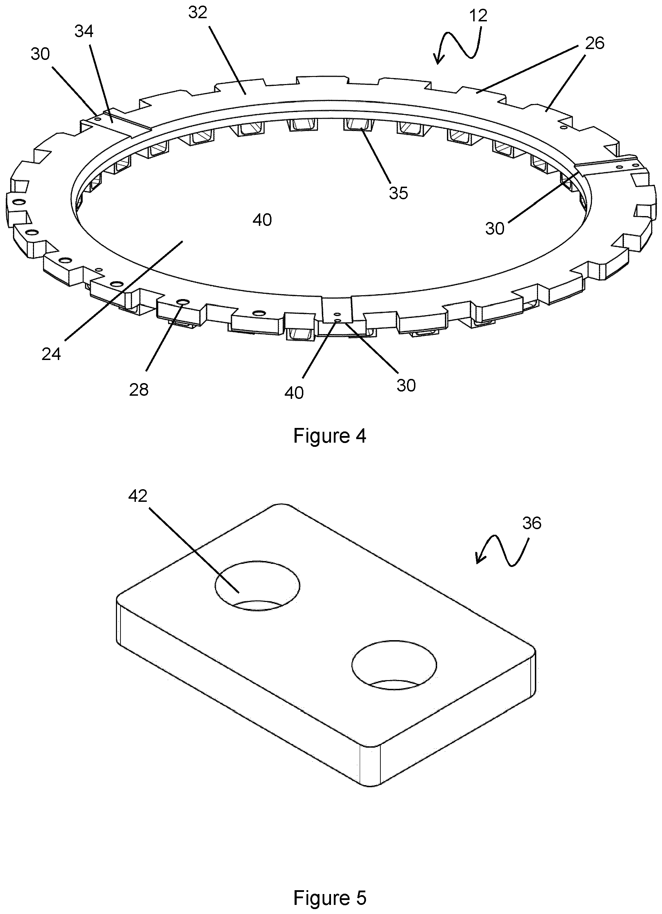

The intermediate plate 12 is shown in isolation in figure 4. The intermediate plate 12 comprises a ring or annular shape. An aperture 24 is provided to receive the core 6. Tabs 26 or crenelations are provided to engage the inner plate 8A. The tabs 26 may also provide attachment points for the stator core 6. Apertures 28 are provided on the tabs 26 to allow attachments of the plates 22.

Grooves 30 are provided on a first face 32 of the intermediate plate 12. The grooves 30 extend radially (i.e. between the edge of the aperture 24 to the outer face of the plate 12). The grooves 30 are rectangular in plan and/or cross-section. The grooves 30 comprise a flat surface 34 therein. In the present embodiment, three grooves 30 are provided. The grooves 30 are equidistantly spaced about the plate 12.

Compression portions 35 are provided on an opposing side of the intermediate plate 12. The compression portions 35 are configured to engage the stator core 6 to provide a compressive force thereagainst. The compression portion 35 comprises a U-shaped or hollow profile (i.e. in the radial direction). This allows some degree of flexion thereof. A plurality of compression portions are displaced about the circumference of the intermediate plate 12. In the present embodiment, 30 portions 35 are provided, however, it can be appreciated that any can be provided accordingly to specific requirements. For example, between 2 and 50 portions 35 may be provided.

Referring to figures 5-7, a stopping plate 36 is mounted to the intermediate plate 12 in use. The stopping plate 36 is mounted within the groove 30. The stopping plate 36 may affixed by fasteners 38. The fasteners 38 may be received within attachment formations 40 (e.g. screw threads) provided in the groove 30. The stopping plate 36 is therefore removably attached to the intermediate plate. Respective apertures 42 are provided in the plate 36. The stopping plate 12 may comprise a rectangular shape. The stopping plate 12 may be substantially planar. The stopping 12 is coplanar with the intermediate plate (i.e. they lie flat against one another).

The stopping plate 36 is sized that that it extends outside the footprint of the intermediate plate 12 (e.g. beyond an outer edge 44 thereof). In use, the stopping plate 36 abuts against the inner plate 8A. This limits the position of the intermediate plate 12 during installation of the stator core 6. For example, during the shrink fitting process, the position of the core 6 is held in place. Therefore, as the core 6 shrinks during cooling, the axial position thereof may be more accurately determined, helping to avoid misalignment problems. Each of the grooves 30 comprises a respective stopping plate 36.

It can be appreciated, that any number of groove 30 arrangements may be provided. For example, between 1 and 15 grooves 30 may be provided. A stopping plate 36 may be provided for each groove 30 or only a portion thereof. For example, for a common intermediate plate 12 may be provided for a number of different configurations, and the number of stopping plates 36 used may vary according to the specific configuration (e.g. a lighter core may require less stopping plates 36).

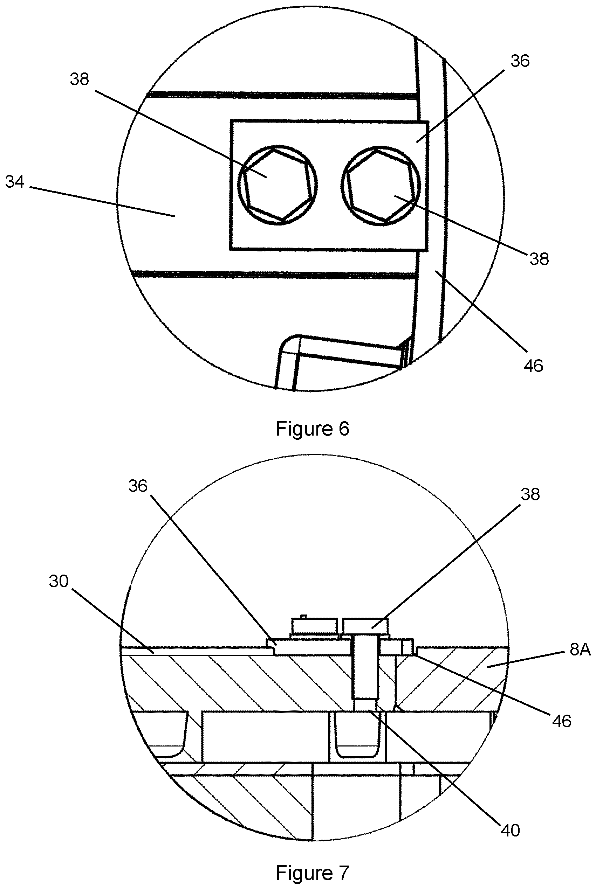

As best seen in figure 7, the inner plate 8A comprises a recess 46 or groove. The recess is provided on a radially inner surface 48 of the inner plate 8A. The recess 46 faces the intermediate plate 12. The recess 46 receives the stopping plate 36. This helps to locate the stopping plate 36 (and therefore intermediate plate 12) in the radial direction. The stopping plate 36 is loosely held in the recess 46 (i.e. no fasteners are used). In the present embodiment, the recess 46 extends substantially around the whole circumference of the inner plate 8A (i.e. continuously). This allows flexibility in the positioning of the intermediate plate 12 and/or stopping plate 36. In other embodiments, a plurality of discrete recesses are provided about the circumference of the inner plate 8A. The recesses are position correspondingly to the stopping plates 36. This may help to locate the stator core 6 in the circumferential direction.

In the present embodiment, the depth of the intermediate plate groove 30 and the inner plate recess 46 is less than the depth of the stopping plate 36. The stopping plate 36 therefore protrudes above the surface of the intermediate plate 12 and/or the inner plate 8A. In other embodiments, the depth of the intermediate plate groove 30 and the inner plate recess 46 is the same or less than the depth of the stopping plate 36. The stopping plate 36 flush therefore flush with the surface of the intermediate plate 12 and/or the inner plate 8A and/or recessed with respect thereto.

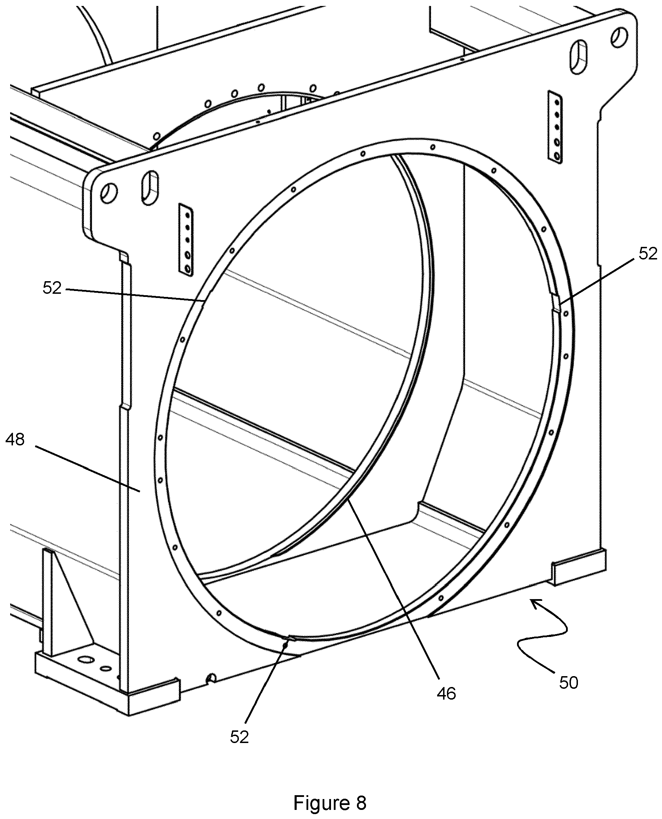

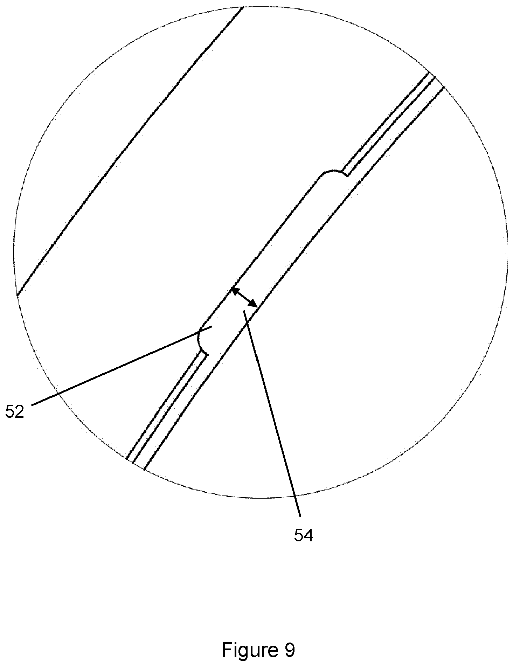

Referring to figures 8 and 9, an outer plate 48 is shown. The outer plate 48 is provided at an end 50 of the stator frame. The outer plate 48 may provide a bearing shield fixing surface. The outer plate 48 comprises a recess 52 to allow the stopping plate 36 to pass therethrough during installation. The depth 54 of the recess corresponds to amount of extension of the stopping plate 36 from the intermediate plate 12. A plurality of recesses 52 are provided in the corresponding positions to the stopping plates 36. In the present embodiment, 3 recesses 52 are provided. Again, it can be appreciated any number of recesses may be provided according to the number of stopping plates 36 accordingly. The recesses 52 help to ensure circumferential alignment of the core 6 during installation.

In the present embodiment, the stopping plate arrangement is provided at the non-drive end 50 (often referred to as "N-end") of the motor 2. This provides axial constraint on one end of the stator core 6, whilst allowing free movement thereof, allowing shrinking during the shrink fit process. In other embodiments, the stopping plate arrangement is provided at the drive-end 52 ("D-end") or both of the non-drive end 50 and the drive end 52. For example, the stopping arrangement is provided additionally or alternatively on the second inner plate 8B.

In some embodiments, the stopping plate 36 is mounted to the inner plate 8A. For example, the stopping plate 36 is provided on an axially inner surface of the inner plate 8A. In some embodiments, the stopping plate 36 is mounted to the inner plate 8A and the intermediate plate 12.

In the present embodiment, the stopping plate 36 is completely detachable from the intermediate plate 12. In other embodiments, the stopping plate 36 may be movably fixed to the intermediate plate 12. For example, the stopping plate 36 may be slidably, rotatably, or pivotably attached to the intermediate plate 12. The stopping plate 36 may therefore be moved to disengage from the inner plate 8A. A locking or retaining mechanism may be used to retain the stopping plate 36 in use.

In the present embodiment, the stopping plate 36 is configured to constrain the stator core in one direction. The direction is parallel to the axial or rotational axis 20 of the motor (see figure 1). Movement of the core is prevented in the direction toward the drive end 52, but otherwise free in direction toward the non-drive end 50. The stopping plate 36 is provided on the intermediate plate 12 in a direction facing the non-drive end 50 (i.e. is outwardly facing). This allows easier access thereto for assembly or disassembly. In some embodiments, movement may be constrained in both axial directions. For example, the stopping plate 36 may be fixed to the inner plate 8A.

### Operation of the invention

The intermediate plate 12 is fixed to the stator core 6. The core 6 is heated and place with the stator frame 4. It can be appreciated that these steps may be provided in any order. During insertion of the stator core 6 into the stator frame 4, the stopping plates 36 aligned with the recesses 52 in the outer plate 48. The core 6 is moved until the stopping plates 36 abut the inner plate 8A. The stopping plate 36 is located within the inner plate groove 30 to help ensure radial alignment.

The stator core 6 then cools. The end portions 18 move toward one another during contraction and into abutment with the intermediate portions 12. The second intermediate portion is then brought into alignment inner plate 18B, whilst the first intermediate portion 12 is constrained by the stopping plate 36. This constraint ensures that the stator core 6 is location in the correct axial position during the cooling phase. Once cooling is complete, the plates 22 are attached to the respective intermediate plates 12 and the inner plates 8A,8B to provide a permanent fixture.

In the event that the axial alignment is not sufficiently accurate, the stator 6 may be heated again. The stopping plate 36 can be removed to allow removable of the core 6 if required (i.e. the core 6 can be removed from both axial directions).

The present arrangement helps to ensure alignment of the stator core, for example, during a shrink fitting process. Providing constraint in a single direction helps with alignment, but does not interfere with the shrink fitting process. Providing the stopping member and associated grooves etc. in an outwardly facing side of the inner plate allows easier access for removal of the stator core. The stopping plates may further aid with circumferential alignment due to the recesses in the inner plate and/or outer plate. Allowing complete of the stopping member further allows the stator core to be removed from any direction.

## Claims

1. An electrical machine (2) comprising:
a stator core (6) extending along an axial direction (20) and supported by a stator frame (4);
an intermediate plate (12) provided between the stator core (6) and the stator frame (4) and configured to support the stator core (6);
where one of the stator frame (4) and the intermediate plate (12) comprises a stopping formation (36) configured to abut the other of the stator frame (4) and the intermediate plate (12) to constrain movement of the stator core (6) relative to the stator frame (4) in at least one direction in the axial direction (20); and
where the stopping formation (36) is movable relative to the one of the stator frame (4) and the intermediate plate (12).

2. An electrical machine according to claim 1, where the stopping formation (36) is detachably fixed to the one of the stator frame (4) and the intermediate plate (12).

3. An electrical machine according to any preceding claim, where the other of the stator frame (4) and the intermediate plate (12) comprises a recess (46) configured to receive the stopping formation (36).

4. An electrical machine according to any preceding claim, where the stopping formation (36) is loosely held on the other of the stator frame (4) and the intermediate plate (12) such that the stator core (6) in constrained in only one direction in the axial direction (20).

5. An electrical machine according to any preceding claim, where the stator frame (6) or stator core (4) comprise a drive end (52) and a non-drive end (50), and the stopping formation (36) is proximal one of the drive end and the non-drive end, such that the other of the drive end and a non-drive end is not constrained in the axial direction via a stopping formation (36).

6. An electrical machine according to any preceding claim, where the one of the stator frame (4) and the intermediate plate (12) comprises a groove (34) configured to receive the stopping formation (36) therein.

7. An electrical machine according to any preceding claim, where the stopping formation (36) is coplanar with stator frame (4) and/or the intermediate plate (12).

8. An electrical machine according to any preceding claim, where the groove (34) and/or the stopping member (36) extend in a radial direction.

9. An electrical machine according to any preceding claim, where the intermediate plate (12) is annular or ring shaped.

10. An electrical machine according to any preceding claim, where the stator frame (4) comprises an outer plate (48) and the outer plate (48) comprises a recess (52) to allow the stopping member (36) to pass therethrough whilst affixed to the intermediate member (12).

11. An electrical machine according to any preceding claim, where the intermediate member (12) comprises a plurality of compression portions (35) configured to engage the stator core (6) in use, the compression portions (35) comprising a hollow profile.

12. An electrical machine according to any preceding claim, comprising one or more plate (22), the plate (22) fixed to both the intermediate member (12) and the stator frame (4) to provide a rigid connection therebetween.

13. A method of assembling an electrical machine (2) comprising:
providing a stator core (6) extending along an axial direction (20) and supporting the stator core (6) using a stator frame (4);
supporting the stator core (6) using an intermediate plate (12) between the stator core (6) and the stator frame (4), where one of the stator frame (4) and the intermediate plate (12) comprises an stopping formation (36);
abutting the stopping formation (36) against the other of the stator frame (4) and the intermediate plate (12) to constrain movement of the stator core (6) relative to the stator frame (4) in at least one direction in the axial direction (20); and
where the stopping member (36) is movable relative to the one of the stator frame (4) and the intermediate plate (12).

14. A method of assembling an electrical machine according to claim 13, comprising shrink fitting the stator core (6) onto the stator frame (4), and where the stopping formation (36) abuts the other of the stator frame (4) and the intermediate plate (12) to constrain movement of the stator core (6) before and/or during a cooling phase of the shrink fitting process.

15. An intermediate plate (12) for an electrical machine (2) configured to be provided between a stator core (6) and a stator frame (4) and configured to support the stator core (6) comprising:
a stopping formation (36) configured to engage the stator frame (4) to constrain movement of the stator core (6) relative to the stator frame (4) in at least one direction in an axial direction (20) of the stator core (6) in use; and
where the stopping member (36) is movable relative to the intermediate plate (12).
